(19) Europäisches Patentamt
European Patent Office
Office européen des brevets

(11) **EP 4 663 603 A1**

(12) **EUROPEAN PATENT APPLICATION**

(43) Date of publication:
**17.12.2025 Bulletin 2025/51**

(21) Application number: **25178979.8**

(22) Date of filing: **27.05.2025**

(51) International Patent Classification (IPC):
*C01B 32/05* (2017.01)     *C01B 32/205* (2017.01)
*H01M 4/62* (2006.01)     *H01M 10/054* (2010.01)
*C01B 33/02* (2006.01)     *H01M 4/587* (2010.01)
*H01M 4/133* (2010.01)     *H01M 10/0525* (2010.01)
*H01M 4/134* (2010.01)     *H01M 4/36* (2006.01)
*H01M 4/38* (2006.01)

(52) Cooperative Patent Classification (CPC):
**C01B 32/05; C01B 32/205; C01B 33/02;
H01M 4/133; H01M 4/134; H01M 4/362;
H01M 4/386; H01M 4/587; H01M 4/625;
H01M 10/0525; H01M 10/054;** C01P 2002/60;
C01P 2002/72; C01P 2006/12; C01P 2006/14;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.05.2024   CN 202410674499**

(71) Applicant: **Ningde Amperex Technology Ltd.
Ningde City, Fujian Province 352100 (CN)**

(72) Inventor: **LIU, Xianghuan
Ningde City, Fujian Province, China, 352100 (CN)**

(74) Representative: **Icosa
83 avenue Denfert-Rochereau
75014 Paris (FR)**

(54) **POROUS CARBON MATERIAL AND PREPARATION METHOD THEREOF, SILICON-CARBON MATERIAL, SECONDARY BATTERY, AND ELECTRONIC DEVICE**

(57)     A porous carbon material, in an XRD pattern of the porous carbon material, a (002) crystal plane diffraction peak is exhibited at a diffraction angle $2\theta$ of 26.1° to 26.9°, and a full-width-at-half-maximum of the (002) crystal plane diffraction peak is FWHM°, and $1.80 \leq FWHM \leq 11.00$. By increasing the graphitization degree of the porous carbon material and forming a crystal structure with well-ordered carbon atoms, endowing the porous carbon material with relatively high conductivity and structural stability, and can favorably reduce the internal resistance of the silicon-carbon material after a silicon material is deposited.

FIG. 1

EP 4 663 603 A1

(52) Cooperative Patent Classification (CPC): (Cont.)
C01P 2006/16; C01P 2006/40; H01M 2004/021;
H01M 2004/027; Y02E 60/10

Description

## TECHNICAL FIELD

This application relates to the field of energy storage technology, and in particular, to a porous carbon material and a preparation method thereof, a silicon-carbon material, a secondary battery, and an electronic device.

## BACKGROUND

An active material in a secondary battery can be activated by charging after the secondary battery is discharged, so as to implement efficient conversion between electrical energy and chemical energy, thereby greatly improving energy utilization efficiency and promoting wide application of secondary batteries in electronic devices. With the continuous expansion of application scenarios, the performance requirements for secondary batteries are increasingly higher, especially in terms of high-rate charging and discharging. High-rate charging and discharging mean that a secondary battery needs to store and release a large amount of electrical energy in a short period of time, thereby imposing extremely high requirements on the ion diffusion rate, conductivity, and other metrics of the secondary battery.

Currently, secondary batteries commonly available on the market usually face the problems such as rapid fading of capacity of the battery when charged or discharged at a high rate, thereby severely shortening the service life of the battery. Therefore, improving the charge and discharge performance of secondary batteries at a high rate has currently become an urgent technical challenge that needs to be addressed in the field of secondary batteries.

## SUMMARY

The applicant hereof finds that the internal resistance of a secondary battery can be reduced by using an electrode material with a high ion diffusion rate. Although this method can improve the C-rate performance of the secondary battery to some extent, the crystal structure of the electrode material is prone to be disrupted when the ions move and diffuse rapidly, thereby leading to problems such as an unstable structure of the electrode material and intensified interface reactions, and reducing the cycle performance and anti-expansion performance of the secondary battery.

To solve the above problem, this application provides a porous carbon material and a preparation method thereof, a silicon-carbon material, a secondary battery, and an electronic device. By increasing the graphitization degree of the porous carbon material and forming a crystal structure with well-ordered carbon atoms, this application endows the porous carbon material with relatively high conductivity and structural stability, and can favorably reduce the internal resistance of the silicon-carbon material after a silicon material is deposited, and slow down the expansion rate of the silicon-carbon material during cycling, thereby improving the C-rate performance of the secondary battery, and achieving a relatively high level of cycle performance and anti-expansion performance at the same time.

According to a first aspect, this application provides a porous carbon material. In an XRD pattern of the porous carbon material, a (002) crystal plane diffraction peak is exhibited at a diffraction angle $2\theta$ of 26.1° to 26.9°, and a full-width-at-half-maximum of the (002) crystal plane diffraction peak is FWHM°, and $1.80 \leq$ FWHM $\leq 11.00$. This application controls the (002) crystal plane diffraction peak to be exhibited at the diffraction angle $2\theta$ of 26.1° to 26.9° in the XRD pattern, so that the porous carbon material assumes a graphitized structure. In addition, this application controls the full-width-at-half-maximum FWHM° of the (002) crystal plane diffraction peak to satisfy $1.80 \leq$ FWHM $\leq 11.00$, so that the porous carbon material of this application possesses a suitable grain size and a suitable crystallinity. On this basis, the crystal structure with well-ordered carbon atoms is conducive to rapid conduction of electrons, and can reduce the overall internal resistance of the silicon-carbon material after the silicon material is deposited subsequently. The structure with the above full-width-at-half-maximum can also improve the structural stability of the porous carbon material, and provide stable support for the silicon material, and is also conducive to uniform dispersion and deposition of the silicon material. In this way, the resultant silicon-carbon material is more resistant to stress changes during charging and discharging, thereby reducing the structural disruption caused by volume expansion or shrinkage of the silicon material during charging and discharging, and in turn, improving the C-rate performance, anti-expansion performance, and cycle performance of the secondary battery.

In some embodiments, a crystallite size of the porous carbon material is g nm, and $0.88 \leq g \leq 4.20$. When the crystallite size of the porous carbon material, denoted as g nm, is controlled to satisfy $0.88 \leq g \leq 4.20$, the crystallite size can enhance the short-range ordered structure of the carbon material, thereby further improving the electron transport rate. In addition, the crystallite size working together with the above-mentioned full-width-at-half-maximum can also improve the structural stability of the porous carbon material, and endow the silicon-carbon material with relatively high cycle stability, thereby further improving the C-rate performance, anti-expansion performance, and cycle performance of the secondary battery.

In some embodiments, $2.20 \leq FWHM \leq 8.66$; and/or $1.54 \leq g \leq 3.10$. By controlling the full-width-at-half-maximum of the (002) crystal plane diffraction peak of the porous carbon material and the crystallite size to meet the above preferred ranges respectively, this application can further improve the electrical conductivity and structural stability of the porous carbon material, and significantly improve the C-rate performance, anti-expansion performance, and cycle performance of the secondary battery. Preferably, when the full-width-at-half-maximum of the (002) crystal plane diffraction peak of the porous carbon material and the crystallite size meet the above ranges at the same time, the two parameters coordinating with each other can further optimize the crystal structure of the porous carbon material, and enable the secondary battery to exhibit more excellent C-rate performance, anti-expansion performance, and cycle performance.

In some embodiments, the porous carbon material satisfies at least one of the following conditions: (1) based on a pore volume of the porous carbon material, a pore volume percentage of ultramicropores with a pore diameter less than or equal to 0.7 nm is $P_0$%, and a pore volume percentage of micropores with a pore diameter less than or equal to 2 nm is $P_1$%, $2 \leq P_0 \leq 28$, and $82 \leq P_1 \leq 100$; (2) a specific surface area of the porous carbon material is SA $m^2/g$, and $1014 \leq SA \leq 2492$; or (3) a pore volume of the porous carbon material is Pv $cm^3/g$, and $0.52 \leq Pv \leq 1.60$. By controlling the pore volume percentages, specific surface area, and pore volume of ultramicropores and micropores in the porous carbon material to meet the above ranges respectively, this application achieves a relatively large specific surface area and a micropore-rich structure of the material. In addition, the proportion of ultramicropores is reduced, thereby improving the capability of adsorbing the silane gas and achieving a higher silicon deposition amount. This design can also improve the mechanical strength and structural stability of the porous carbon material, and obtain a silicon-carbon material with a high energy density and a stable structure. In this way, the secondary battery achieves a relatively high energy density and excellent C-rate performance, anti-expansion performance, and cycle performance at the same time.

In some embodiments, an electrical conductivity of the porous carbon material at a pressure of 130 MPa is Z S/cm, and $14.0 \leq Z \leq 97.0$. This application adjusts and controls the crystal structure of the porous carbon material, thereby improving the conductivity of the material. When the electrical conductivity meets the above range, the crystal structure of the porous carbon material exhibits an evident ordered arrangement. The porous carbon material of this structure also possesses relatively high mechanical strength and structural stability, thereby optimizing the anti-expansion performance and cycle performance of the secondary battery.

According to a second aspect, this application provides a preparation method of any one of the above-mentioned porous carbon materials. The method includes the following steps: step 1: mixing a carbon precursor, a curing agent, and a graphitization catalyst, and then performing a first isothermal treatment at $T_1$ °C for a treatment time of $t_1$ h to obtain a cured product, where $120 \leq T_1 \leq 300$, $1 \leq t_1 \leq 20$, and the graphitization catalyst includes at least one of ferric nitrate or ferric citrate; step 2: placing the cured product in an inert atmosphere, and performing a second isothermal treatment at $T_2$ °C for a treatment time of $t_2$ h to obtain a carbide, where $800 \leq T_2 \leq 1500$, and $0.5 \leq t_2 \leq 8.0$; and step 3: placing the carbide in an activator atmosphere, performing a third isothermal treatment at $T_3$ °C for a treatment time of $t_3$ h to obtain the porous carbon material, where $800 \leq T_3 \leq 1100$, and $6 \leq t_3 \leq 30$. This application uses ferric nitrate or ferric citrate as a graphitization catalyst. The iron element in the ferric nitrate or ferric citrate can more strongly promote the release and rearrangement of carbon atoms in the carbon precursor, so that the porous carbon forms a well-ordered carbon structure to obtain porous carbon. On this basis, this application employs three isothermal treatments and controls the treatment temperature and treatment time of the three isothermal treatments, thereby further promoting the release and rearrangement process of carbon atoms, improving the graphitization degree of the porous carbon material, and achieving a relatively large specific surface area and a micropore-rich structure at the same time. In this way, when applied in a secondary battery, the prepared silicon-carbon material can improve the C-rate performance, anti-expansion performance, and cycle performance of the secondary battery.

In some embodiments, the preparation method satisfies at least one of the following conditions: (1) the carbon precursor includes phenolic resin, and a molecular weight of the phenolic resin is 519 to 976; (2) a mass ratio of the graphitization catalyst to the carbon precursor is w, and $0.001 \leq w \leq 0.230$; (3) the curing agent is at least one selected from urotropine, melamine, or urea; (4) $849 \leq T_2 \leq 1299$; or (5) the activator atmosphere is at least one selected from carbon dioxide, water vapor, oxygen, air, or ammonia. By controlling the preparation method to satisfy at least one of the above conditions, this application can further optimize the graphitized structure and the microporous structure of the porous carbon, and improve the C-rate performance, anti-expansion performance, and cycle performance of the secondary battery.

According to a third aspect, this application provides a silicon-carbon material. The silicon-carbon material includes the porous carbon material provided in the first aspect or a porous carbon material prepared by the preparation method provided in the second aspect. By controlling the graphitization degree and crystallinity of the porous carbon, this application improves the conductivity and structural stability of the carbon matrix in the silicon-carbon material, thereby reducing the resistance of the silicon-carbon material and the volume expansion during the charging and discharging, and improving the C-rate performance, anti-expansion performance, and cycle performance of the secondary battery.

According to a fourth aspect, this application provides a secondary battery. The secondary battery includes a positive electrode, a negative electrode, and an electrolyte solution. The negative electrode includes a negative current collector and a negative active material layer disposed on at least one surface of the negative current collector. The negative active material layer includes the silicon-carbon material provided in the third aspect.

According to a fifth aspect, this application provides an electronic device. The electronic device includes the secondary battery provided in the fourth aspect.

Based on the porous carbon material and the preparation method thereof, the silicon-carbon material, the secondary battery, and the electronic device provided in this application, this application can improve the electrical conductivity and structural stability by improving the graphitization degree and/or crystallite size of the porous carbon material. Used as a skeleton, the porous carbon material can provide stable support for the silicon material, and reduce the stress caused by the volume expansion of the silicon material during the charging and discharging, thereby reducing the crumbling of the silicon-carbon material, and improving the C-rate performance, anti-expansion performance, and cycle performance of the secondary battery. In addition, by further controlling the micropore volume percentage, the specific surface area and/or pore volume of the porous carbon material, this application can improve the structural stability of the material and the capability of adsorbing the silane gas. In this way, the secondary battery achieves a relatively high energy density and excellent C-rate performance, anti-expansion performance, and cycle performance at the same time.

**BRIEF DESCRIPTION OF DRAWINGS**

FIG. 1 is an XRD pattern of a porous carbon material according to Embodiment 3-6 and Comparative Embodiments 1-1 and 1-2 of this application;
FIG. 2 is a pore distribution graph of a porous carbon material according to Embodiment 3-6; and
FIG. 3 is an adsorption isotherm graph of a porous carbon material according to Embodiment 3-6.

**DETAILED DESCRIPTION**

To make the objectives, technical solutions, and advantages of this application clearer, the following describes this application in more detail with reference to embodiments. Understandably, the specific embodiments described herein are merely intended to explain this application, but are not intended to limit this application.

By virtue of a relatively high lithium storage capacity, silicon-carbon materials are usually used as a lithium-ion negative electrode material to increase the overall energy density of a secondary battery. A silicon-carbon material is typically prepared from porous carbon by silane vapor deposition. In the process of studying silicon-carbon materials, the applicant hereof finds that, in a silicon-carbon material, the silicon material is a semiconductor material that is inferior in conductivity, and the porous carbon material is amorphous carbon. The conductivity of the porous carbon material is dozens of times less from that of a graphite material. Therefore, the overall conductivity of the silicon-carbon material is relatively low, thereby impairing the electron conduction capability of a negative electrode. Consequently, the internal resistance of the resultant secondary battery is relatively high, thereby impairing the C-rate performance of the secondary battery. In addition, the volume expansion effect of the silicon material also impairs the cycle performance of the secondary battery. Therefore, although the silicon-carbon material can increase the energy density of the secondary battery, the silicon-carbon material produces an adverse effect on the C-rate performance and cycle performance of the secondary battery.

In view of the above problem, according to a first aspect, this application provides a porous carbon material. In an XRD pattern of the porous carbon material, a (002) crystal plane diffraction peak is exhibited at a diffraction angle $2\theta$ of 26.1° to 26.9°, and a full-width-at-half-maximum of the (002) crystal plane diffraction peak is FWHM°, and $1.80 \leq FWHM \leq 11.00$. This application the (002) crystal plane diffraction peak to be exhibited at a diffraction angle $2\theta$ of 26.1° to 26.9° in the XRD pattern of the porous carbon material. This diffraction angle range is close to the diffraction angle position of an ideal graphite crystal, so that the porous carbon material assumes a graphitized structure with well-ordered carbon atoms. In addition, this application controls the full-width-at-half-maximum FWHM° of the (002) crystal plane diffraction peak to satisfy $1.80 \leq FWHM \leq 11.00$, so that the porous carbon material of this application possesses a suitable grain size and a suitable crystallinity. The porous carbon material of this application improves the electron transport rate through a crystal structure with well-ordered carbon atoms, and can reduce the internal resistance of the silicon-carbon material after the silicon material is deposited subsequently, thereby improving the C-rate performance of the secondary battery. In addition, the porous carbon material that satisfies the above-mentioned full-width-at-half-maximum possesses an ordered and regular crystal structure and a suitable grain size inside, thereby ensuring relatively high structural stability, and providing a stable skeleton support structure for the silicon material. In addition, the above-mentioned porous carbon material promotes the uniform deposition of the silicon material in the porous carbon skeleton, favorably restricts the volume expansion of the silicon material during alloying, slows down the volume expansion speed of the silicon material, reduces the stress generated by the volume expansion, and at the same time, alleviates the structural disruption of the porous carbon material and the silicon material caused by the volume expansion, thereby improving the anti-expansion performance and cycle performance of the secondary battery.

In some embodiments, the value of the FWHM is 1.80, 2.20, 2.34, 2.96, 3.42, 3.91, 4.49, 4.82, 5.22, 6.07, 6.36, 7.07, 7.34, 7.89, 8.47, 8.66, 8.86, 9.19, 9.58, 10.48, 10.58, 11.00, or a value falling within a range formed by any two thereof. In some preferred embodiments, $2.20 \leq FWHM \leq 8.66$. When the full-width-at-half-maximum FWHM° of the (002) crystal plane diffraction peak of the porous carbon material is controlled to satisfy the above range, the graphitization degree of the porous carbon material can be improved, and a well-ordered layered structure can be formed, thereby improving the electron transport rate and structural stability of the porous carbon material, restricting the volume expansion of the silicon material, and improving the C-rate performance, anti-expansion performance, and cycle performance of the secondary battery.

In some embodiments, a crystallite size of the porous carbon material is g nm, and $0.88 \leq g \leq 4.20$. In some embodiments, the value of g is 0.88, 0.97, 1.17, 1.26, 1.54, 1.70, 1.87, 2.03, 2.15, 2.39, 2.52, 2.80, 2.88, 3.04, 3.10, 3.27, 3.45, 3.55, 3.71, 3.99, 4.14, 4.20, or a value falling within a range formed by any two thereof. In some preferred embodiments, $1.54 \leq g \leq 3.10$. By controlling the crystallite size of the porous carbon material to meet the above range, this application can enhance the short-range ordered structure of the carbon material, improve the electronic conductivity and structural stability of the porous carbon material, and also promote the subsequent uniform dispersion and deposition of the silicon material, reduce the stress caused by the volume expansion of the silicon material, and improve the cycle stability of the silicon-carbon material, thereby further improving the C-rate performance, anti-expansion performance, and cycle performance of the secondary battery.

In some embodiments, based on a pore volume of the porous carbon material, a pore volume percentage of ultramicropores with a pore diameter less than or equal to 0.7 nm is $P_0$%, and a pore volume percentage of micropores with a pore diameter less than or equal to 2 nm is $P_1$%, $2 \leq P_0 \leq 28$, and $82 \leq P_1 \leq 100$. In some embodiments, the value of $P_0$ is 2, 3, 6, 7, 9, 11, 13, 15, 17, 19, 21, 22, 25, 27, 28, or a value falling within a range formed by any two thereof. In some embodiments, the value of $P_1$ is 82, 83, 85, 86, 87, 89, 90, 91, 93, 94, 95, 97, 98, 99, 100, or a value falling within a range formed by any two thereof. This application controls the pore volume percentage of ultramicropores and micropores in the porous carbon material to meet the above ranges. The microporous structure can enhance the capability of the porous carbon in adsorbing the silane gas during silane deposition, increase the energy density of the secondary battery, and promote the uniform dispersion and deposition of the silicon material. The microporous structure and the ultramicroporous structure that meet the above pore volume percentage ranges can work together to further improve the mechanical strength and structural stability of the porous carbon, reduce structural disruption caused by the volume expansion or shrinkage of the silicon material during charging and discharging, and improve the anti-expansion performance and cycle performance of the secondary battery.

In some embodiments, a specific surface area of the porous carbon material is SA m$^2$/g, and $1014 \leq SA \leq 2492$. In some embodiments, the value of SA is 1014, 1089, 1108, 1226, 1295, 1398, 1444, 1546, 1632, 1643, 1739, 1834, 1930, 1963, 2060, 2147, 2190, 2335, 2368, 2419, 2492, or a value falling within a range formed by any two thereof. This application controls the specific surface area of the porous carbon material to meet the above range, and can increase the adsorption amount of the silane gas during preparation of the silicon-carbon material, so that the amount of silicon deposition is larger in the silicon-carbon material, thereby increasing the energy density of the secondary battery. The above-mentioned specific surface area range combined with the specified micropore percentage can further increase the mechanical strength of the porous carbon material, enhance the effect of restricting the volume expansion of the silicon material, and improve the anti-expansion performance and cycle performance of the secondary battery.

In some embodiments, a pore volume of the porous carbon material is Pv cm$^3$/g, and $0.52 \leq Pv \leq 1.60$. In some embodiments, the value of Pv is 0.52, 0.56, 0.61, 0.66, 0.74, 0.77, 0.83, 0.91, 0.97, 0.98, 1.07, 1.14, 1.19, 1.24, 1.27, 1.32, 1.42, 1.48, 1.50, 1.59, 1.60, or a value falling within a range formed by any two thereof. By controlling the pore volume of the porous carbon material to meet the above range, this application makes the porous carbon material bear a larger amount of silicon and achieve relatively high mechanical strength at the same time, thereby obtaining a silicon-carbon material with a high energy density and a stable structure. In this way, the secondary battery achieves a relatively high energy density and excellent C-rate performance, anti-expansion performance, and cycle performance at the same time.

In some embodiments, an electrical conductivity of the porous carbon material at a pressure of 130 MPa is Z S/cm, and $14.0 \leq Z \leq 97.0$. In some embodiments, the value of Z is 14, 15, 22, 24, 29, 35, 36, 43, 47, 51, 57, 61, 63, 71, 74, 76, 80, 88, 91, 96, 97, or a value falling within a range formed by any two thereof. This application adjusts and controls the crystal structure of the porous carbon material, thereby improving the conductivity of the material and improving the C-rate performance of the secondary battery. When the electrical conductivity is controlled to meet the above range, the crystal structure of the porous carbon material exhibits an evident ordered arrangement. The porous carbon material of this structure also possesses relatively high mechanical strength and structural stability, thereby optimizing the anti-expansion performance and cycle performance of the secondary battery.

According to a second aspect, this application provides a preparation method of any one of the above-mentioned porous carbon materials. The method includes the following steps: step 1: mixing a carbon precursor, a curing agent, and a graphitization catalyst, and then performing a first isothermal treatment at $T_1$ °C for a treatment time of $t_1$ h to obtain a cured product, where $120 \leq T_1 \leq 300$, $1 \leq t_1 \leq 20$, and the graphitization catalyst includes at least one of ferric nitrate or ferric citrate; step 2: placing the cured product in an inert atmosphere, and performing a second isothermal treatment at $T_2$ °C for a treatment time of $t_2$ h to obtain a carbide, where $800 \leq T_2 \leq 1500$, and $0.5 \leq t_2 \leq 8.0$; and step 3: placing the carbide in an activator atmosphere, performing a third isothermal treatment at $T_3$ °C for a treatment time of $t_3$ h to obtain the porous carbon material, where $800 \leq T_3 \leq 1100$, and $6 \leq t_3 \leq 30$. This application uses ferric nitrate or ferric citrate as a graphitization catalyst. The iron element promotes the release and rearrangement of carbon atoms in the carbon precursor, so that the porous carbon forms an ordered carbon structure, thereby improving the graphitization degree of the porous carbon material. On this basis, this application employs three isothermal treatments and controls the treatment temperature and treatment time of the three isothermal treatments, thereby promoting the formation of a micropore-rich structure in the carbon precursor, promoting the release and rearrangement of carbon atoms, improving the graphitization degree of the porous carbon material, increasing the crystallite size, and improving the electrical conductivity and structural stability of the porous carbon graphite material. In this way, the secondary battery achieves a higher level of C-rate performance, anti-expansion performance, and cycle performance.

In some preferred embodiments, the graphitization catalyst is ferric citrate. The ferric citrate assumes a short-chain carbon-oxygen structure, and therefore, is thermally unstable and easily decomposable and escapable, thereby forming pores inside the carbon material. This characteristic improves the graphitization degree of the porous carbon, and increases the specific surface area and pore volume of the porous carbon material.

In some embodiments, the value of $T_1$ is 120, 126, 137, 148, 150, 163, 170, 183, 193, 202, 206, 220, 232, 238, 252, 262, 270, 279, 286, 296, 300, or a value falling within a range formed by any two thereof. In some embodiments, the value of $t_1$ is 1, 2, 3, 4, 5, 6, 7, 9, 10, 11, 12, 13, 14, 15, 16, 17, 19, 20, or a value falling within a range formed by any two thereof. This application controls the temperature and time of the first isothermal treatment to meet the above ranges, thereby promoting sufficient polymerization and curing of the carbon precursor. In this way, the carbon atom content in the resultant cured product is sufficient, thereby facilitating the subsequent carbonization reaction to form a carbide of a preliminary structure.

In some embodiments, the value of $T_2$ is 800, 815, 849, 871, 904, 918, 979, 997, 1057, 1077, 1103, 1144, 1185, 1232, 1265, 1299, 1308, 1319, 1361, 1401, 1435, 1496, 1500, or a value falling within a range formed by any two thereof. In some preferred embodiments, $849 \leq T_2 \leq 1299$. In some embodiments, the value of $t_2$ is 0.5, 0.8, 1.1, 1.5, 1.8, 2.3, 2.8, 3.1, 3.4, 3.7, 4.2, 4.7, 5.0, 5.3, 5.8, 6.3, 6.6, 7.1, 7.3, 7.9, 8.0, or a value falling within a range formed by any two thereof. By controlling the temperature and time of the second isothermal treatment to meet the above ranges, this application can promote the escape of organic gas to form a carbide of a preliminary structure. In this process, the rearrangement of carbon atoms is promoted, the graphitization degree of the carbide is enhanced, and it is convenient to subsequently diffuse the activator atmosphere into the carbide matrix, thereby providing a basis for the formation of the porous carbon material of this application.

In some embodiments, the value of $T_3$ is 800, 809, 829, 832, 848, 873, 888, 909, 914, 934, 952, 968, 989, 999, 1013, 1030, 1051, 1060, 1069, 1096, 1100, or a value falling within a range formed by any two thereof. In some embodiments, the value of $t_3$ is 6, 7, 8, 9, 10, 11, 14, 15, 16, 17, 18, 20, 21, 22, 23, 24, 25, 26, 28, 29, 30, or a value falling within a range formed by any two thereof. By controlling the temperature and time of the third isothermal treatment to fall within the above ranges, this application can control the diffusion of the activator gas and the progress of the activation reaction, optimize the pore size distribution of the porous carbon material, improve the graphitization degree of the porous carbon material, and facilitate the formation of a porous carbon material of a relatively high degree of graphitization and a high porosity. In addition, the well-coordinated temperature and time of the third isothermal treatment can prevent the pores from being etched to an excessive depth, ensure an appropriate pore volume of the porous carbon material, and increase the compaction density, thereby facilitating the improvement of conductivity.

In some embodiments, the carbon precursor includes phenolic resin. A molecular weight of the phenolic resin is 519 to 976. In some embodiments, the molecular weight of the phenolic resin is 519, 531, 558, 587, 601, 623, 654, 665, 711, 713, 758, 770, 787, 811, 849, 869, 896, 917, 950, 952, 976, or a value falling within a range formed by any two thereof. This application selects the phenolic resin with the above molecular weight as a carbon precursor, thereby improving the uniformity of mixing with the graphitization catalyst. The specified molecular weight works together with the above graphitization catalyst and isothermal treatment conditions to increase the molecular weight of the phenolic resin by curing and crosslinking in contrast to conventional precursors such as biomass, petroleum coke, or other resin precursors. In the resultant porous carbon, the carbon atom arrangement is more orderly, the graphitization degree of the porous carbon material is improved, the crystallite size is increased, and therefore, the electrical conductivity of the silicon-carbon material is improved.

In some embodiments, a mass ratio of the graphitization catalyst to the carbon precursor is w, and $0.001 \leq w \leq 0.230$. In some embodiments, the value of w is 0.001, 0.004, 0.018, 0.036, 0.046, 0.060, 0.069, 0.080, 0.089, 0.099, 0.117, 0.122, 0.136, 0.150, 0.161, 0.170, 0.193, 0.194, 0.213, 0.228, 0.230, or a value falling within a range formed by any two thereof. This application controls the mass ratio of the graphitization catalyst to the carbon precursor to meet the above range. This parameter works with the above-mentioned isothermal treatment conditions to promote the continuous release and rearrangement of carbon atoms, improve the graphitization degree and crystallinity of the porous carbon material, and improve the microporous pore structure at the same time, thereby enhancing the mechanical strength and structural stability of the porous carbon material. On the other hand, the above ratio of the graphitization catalyst to the carbon precursor can also affect the residual carbon of the polymer precursor during carbonization as well as the arrangement of carbon atoms in the structure of the carbon material, and can act as a porogen to increase the specific surface area and pore volume of the activated carbon material. The appropriate amount of the graphitization catalyst added can also reduce the formation of large holes or large mesopores inside the carbon material, and alleviate the problem of increased pore volume but reduced specific surface area.

In some embodiments, the curing agent is at least one selected from urotropine, melamine, or urea. Such curing agents can participate in changing the molecular structure and properties of the phenolic resin, improve the polymerization degree and curing degree of the carbon precursor, and improve the effect of subsequent carbonization and activation treatment.

In some embodiments, in step 2, the inert atmosphere is at least one selected from nitrogen or argon.

In some embodiments, step 2 further includes: performing a mechanical treatment such as pulverization or ball-milling on the carbide until the resultant particles can pass through a 200-mesh sieve, and preferably, a 300-mesh sieve.

In some embodiments, the activator atmosphere is at least one selected from carbon dioxide, water vapor, oxygen, air, or ammonia. The above activator atmosphere works together with the third isothermal treatment conditions of this application to further promote the formation of a microporous structure inside the porous carbon, thereby obtaining a porous carbon material with a suitable pore volume, a suitable specific surface area, and a suitable micropore distribution percentage. In some more preferred embodiments, the activator atmosphere is carbon dioxide.

According to a third aspect, this application provides a silicon-carbon material. The silicon-carbon material includes the porous carbon material provided in the first aspect or a porous carbon material prepared by the preparation method provided in the second aspect of this application.

The preparation method of the silicon-carbon material is not particularly limited herein, as long as the objectives of this application can be achieved. In exemplary preparation method, the porous carbon material provided in the first aspect of this application is used as a skeleton, and nanoscale silicon particles are deposited on the surface and/or in the pores of the porous carbon skeleton material through silane vapor deposition to obtain the silicon-carbon material.

In some embodiments, the silicon-carbon material includes a porous carbon material and a silicon material located on the surface and/or in the pores of the porous carbon material. When the porous carbon material provided in this application is used as a skeleton for silane vapor deposition, the nanoscale pore channels can limit the growth of silicon grains, and the silicon grains can be limited to the nanoscale size, thereby avoiding the pulverization caused by the lithiation expansion of large-sized silicon particles. Therefore, when applied in a secondary battery, the porous carbon material endows the secondary battery with a relatively high level of energy density, anti-expansion performance, and cycle performance.

According to a fourth aspect, this application provides a secondary battery. The secondary battery includes a positive electrode, a negative electrode, and an electrolyte solution. The negative electrode includes a negative current collector and a negative active material layer disposed on at least one surface of the negative current collector. The negative active material layer includes the silicon-carbon material provided in the third aspect of this application.

The secondary battery of this application is not particularly limited. For example, the types of the secondary battery may include, but are not limited to, a lithium-ion secondary battery (also called a lithium-ion battery) or a sodium-ion secondary battery.

In this application, the "negative active material layer disposed on at least one surface of the negative current collector" means that the negative active material layer may be disposed on one surface of the negative current collector in the thickness direction or on both surfaces of the negative current collector in the thickness direction of the current collector. It is hereby noted that the "surface" here may be the entire region of the negative current collector, or a partial region of the negative current collector, without being particularly limited herein, as long as the objectives of the application can be achieved. The thickness of the negative active material layer is not particularly limited herein, as long as the objectives of this application can be achieved. For example, the thickness of the negative active material layer on a single side of the current collector may be 30 $\mu$m to 160 $\mu$m.

In some embodiments, the negative active material layer further includes natural graphite and/or artificial graphite.

The negative current collector is not particularly limited herein, as long as the objectives of this application can be achieved. For example, the negative current collector may be copper foil, aluminum foil, copper alloy foil, nickel foil, stainless steel foil, titanium foil, foamed nickel, foamed copper, a composite current collector (such as a carbon copper composite current collector, a nickel copper composite current collector, or a titanium copper composite current collector), a conductive metal-clad polymer base, or any combination thereof. The thickness of the negative current collector is not particularly limited in this application, as long as the objectives of this application can be achieved. For example, the thickness of the negative current collector is 4 $\mu$m to 10 $\mu$m.

In this application, the negative active material layer may further include a negative electrode binder. The negative electrode binder may include, but is not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid (PAA), styrene-butadiene rubber, acrylated styrene-butadiene rubber, epoxy resin, or nylon.

In this application, the negative active material layer may further include a conductive agent. The types of the conductive agent in the negative active material layer are not particularly limited herein, as long as the objectives of this application can be achieved. For example, the conductive agent may be, but is not limited to, a carbon-based material, a metal-based material, a conductive polymer, or a mixture thereof. In some embodiments, the carbon-based material is selected from carbon black, acetylene black, Ketjen black, carbon fibers, or any combination thereof. In some embodiments, the metal-based material is selected from metal powder, metal fibers, copper, nickel, aluminum, or silver. In some embodiments, the conductive polymer is a polyphenylene derivative. The mass ratio between the negative electrode material, the conductive agent, and the negative electrode binder in the negative active material layer is not particularly limited herein, as long as the objectives of this application can be achieved. For example, the amount of the negative active material in the negative electrode plate is 1.0 mg/cm$^2$ to 1.5 mg/cm$^2$.

The positive electrode is not particularly limited herein, as long as the objectives of this application can be achieved. For example, the positive electrode includes a positive current collector and a positive active material layer disposed on at least one surface of the positive current collector. The "positive active material layer disposed on at least one surface of the positive current collector" means that the positive active material layer may be disposed on one surface of the positive current collector or on both surfaces of the positive current collector along the thickness direction of the current collector. It is hereby noted that the "surface" here may be the entire region of the surface of the positive current collector, or a partial region of the surface of the positive current collector, without being particularly limited herein, as long as the objectives of the application can be achieved.

The positive current collector is not particularly limited herein, as long as the objectives of this application can be achieved. For example, the positive current collector may include aluminum foil, aluminum alloy foil, a composite current collector (such as an aluminum carbon composite current collector), or the like. The composite current collector may be formed by disposing a metal material (copper, copper alloy, nickel, nickel alloy, titanium, titanium alloy, silver, silver alloy, and the like) on a polymer substrate.

The positive active material layer of this application includes a positive active material. The type of the positive active material is not particularly limited herein, as long as the objectives of this application can be achieved. For example, the positive active material may include at least one of lithium nickel cobalt manganese oxide (LiNi$_{0.90}$Co$_{0.05}$Mn$_{0.05}$O$_2$ (NCM955), NCM811, NCM622, NCM523, NCM111), lithium nickel cobalt aluminum oxide, lithium iron phosphate, lithium vanadium phosphate, lithium cobalt phosphate, lithium manganese phosphate, lithium manganese iron phosphate, a lithium-rich manganese-based material, lithium cobalt oxide (LiCoO$_2$), lithium iron silicate, lithium vanadium silicate, lithium cobalt silicate, lithium manganese silicate, spinel lithium manganese oxide, spinel lithium nickel manganese oxide, or lithium titanium oxide. In this application, the positive active material may further include a non-metal element. For example, the non-metal element includes at least one of fluorine, phosphorus, boron, chlorine, silicon, or sulfur. In this application, the thicknesses of the positive current collector and the positive active material layer are not particularly limited, as long as the objectives of this application can be achieved. For example, the thickness of the positive current collector is 5 $\mu$m to 20 $\mu$m, and the thickness of the positive active material layer on a single side is 30 $\mu$m to 120 $\mu$m.

In this application, the positive active material layer may further include a positive electrode binder and a conductive agent. The type of the positive electrode binder in the positive active material layer is not particularly limited herein, as long as the objectives of this application can be achieved. For example, the positive electrode binder may include, but is not limited to, at least one of polyvinylidene fluoride, polytetrafluoroethylene, polyolefins, sodium carboxymethyl cellulose, lithium carboxymethyl cellulose, modified polyvinylidene fluoride, modified styrene-butadiene rubber (SBR), or polyurethane. In some embodiments, the polyolefin binders include at least one of polyethylene, polypropylene, polyvinyl ester, polyvinyl alcohol, or polyacrylic acid.

The type of the conductive agent in the positive active material layer is not particularly limited herein, as long as the objectives of this application can be achieved. For example, the conductive agent may be of the same type as the conductive agent in the above-mentioned negative active material layer. In some embodiments, the conductive agent includes a carbon-based material such as natural graphite, artificial graphite, carbon black, acetylene black, Ketjen black, or carbon fiber; a metal-based material such as metal powder or metal fiber containing copper, nickel, aluminum, silver, or the like; a conductive polymer such as a polyphenylene derivative; or any mixture thereof. The mass ratio between the positive active material, the conductive agent, and the positive electrode binder in the positive active material layer is not particularly limited herein. A person skilled in the art may choose according to actual needs, as long as the objectives of this application can be achieved. For example, the amount of the positive active material in the positive electrode plate is 4.0

mg/cm$^2$ to 10.0 mg/cm$^2$.

In this application, the secondary battery further includes an electrolyte solution. According to some embodiments of this application, the electrolyte solution includes a lithium salt and a nonaqueous solvent. The lithium salt may include, but is not limited to, at least one of lithium hexafluorophosphate (LiPF$_6$), lithium tetrafluoroborate (LiBF$_4$), lithium difluorophosphate (LiPO$_2$F$_2$), lithium bistrifluoromethanesulfonimide {LiN(CF$_3$SO$_2$)$_2$, LiTFSI)}, lithium bis(fluorosulfonyl) imide {Li(N(SO$_2$F)$_2$), LiFSI}, lithium bis(oxalato)borate {LiB(C$_2$O$_4$)$_2$, LiBOB}, lithium difluoro(oxalato)borate {LiBF$_2$(C$_2$O$_4$, LiDFOB}, LiNO$_3$, LiClO$_4$, LiB(C$_6$H$_5$)$_4$, LiCH$_3$SO$_3$, LiCF$_3$SO$_3$, LiC(SO$_2$CF$_3$)$_3$, Li$_2$SiF$_6$, lithium bis(trifluoromethanesulfonyl) imide (LiTFSI), or lithium difluoroborate. The content of the lithium salt in the electrolyte solution is not particularly limited herein, as long as the objectives of this application can be achieved. The nonaqueous solvent is not particularly limited herein, as long as the objectives of this application can be achieved. For example, the nonaqueous solvent includes, but is not limited to, at least one of a carbonate ester compound, a carboxylate ester compound, an ether compound, or other organic solvents. The carbonate compound may include, but is not limited to, at least one of a chain carbonate ester compound, a cyclic carbonate ester compound, or a fluorocarbonate ester compound. The chain carbonate compound may include, but is not limited to, at least one of dimethyl carbonate (DMC), diethyl carbonate (DEC), dipropyl carbonate, methyl propyl carbonate, ethylene propyl carbonate, or ethyl methyl carbonate (EMC). The cyclic carbonate compound may include, but is not limited to, at least one of ethylene carbonate (EC), propylene carbonate (PC), butylene carbonate, or vinyl ethylene carbonate. The fluorocarbonate ester compound may include, but is not limited to, at least one of fluoroethylene carbonate, -1,2-difluoroethylene carbonate, -1,1-difluoroethylene carbonate, -1,1,2-trifluoroethylene carbonate, -1,1,2,2-tetrafluoroethylene carbonate, -1-fluoro-2-methyl ethylene, -1-fluoro-1-methyl ethylene carbonate, -1,2-difluoro-1-methyl ethylene carbonate, -1,1,2-trifluoro-2-methyl ethylene carbonate, or trifluoromethyl ethylene carbonate. The carboxylate ester compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone. The ether compound may include, but is not limited to, at least one of 1,3-dioxolane (DOL), ethylene glycol dimethyl ether (1,2-dimethoxyethane, DME), dibutyl ether, tetraglyme, diglyme, 1,2-diethoxyethane, 1-ethoxy-1-methoxyethane, 2-methyltetrahydrofuran, or tetrahydrofuran. The above-mentioned other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The secondary battery according to this application further includes a separator. The material and the shape of the separator used in the secondary battery according to this application are not particularly limited, and may be based on any technology disclosed in the prior art. In some embodiments, the separator includes a polymer or an inorganic compound or the like formed from a material that is stable to the electrolyte solution of this application.

For example, the separator may include a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene nonwoven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene. The polymer layer includes a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

The secondary battery of this application further includes a packaging bag. The packaging bag is configured to accommodate a positive electrode plate, a negative electrode plate, a separator, an electrolyte solution, and other components known in the art for use in a secondary battery. Such other components are not limited herein. The packaging bag is not particularly limited herein, and may be a packaging bag well-known in the art, as long as the objectives of this application can be achieved.

The process of preparing the secondary battery in this application is well known to a person skilled in the art, and is not particularly limited herein. For example, the preparation process may include, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain a secondary battery;

or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain a secondary battery. In addition, an overcurrent prevention element, a guide plate, and the like may be placed into a pocket as required, so as to prevent the rise of internal pressure, overcharge, and overdischarge of the secondary battery.

According to a fifth aspect, this application provides an electronic device. The electronic device includes the secondary battery provided in the fourth aspect of this application.

The electronic device is not particularly limited in this application, and may be any electronic device known in the prior art. For example, the electronic device may include, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or lithium-ion capacitor.

Using a lithium-ion battery as an example, the following describes the technical solution of this application with reference to specific embodiments. Unless otherwise specified, the raw materials used in the following embodiments are all commercial products commonly available from the market, and the apparatuses or devices used are all purchased from a conventional market.

**Test methods**

**XRD test**

An XRD powder diffractometer (model: Bruker D8 Advance) is used for the test: A porous carbon material is taken as a sample to be tested. The specimen to be tested is sieved through a 200-mesh sieve first, and then the powder sieved out is put into a sample pool. Subsequently, the surface of the sample is pressed flat, and the excess powder around the sample is cleaned off. The prepared sample to be tested is placed in the XRD powder diffractometer to undergo testing, and an XRD pattern is collected. Subsequently, the collected XRD pattern is analyzed. By using the Scherrer formula $D = K\lambda/(\beta\cos\theta)$ (K is the Scherrer constant 0.89, D is an average thickness of the grains in a direction perpendicular to the crystal plane (that is, the crystallite size in this application), $\beta$ is the full-width-at-half-maximum FWHM° of the (002) crystal plane diffraction peak of the sample being tested, $\theta$ is a diffraction angle, and $\gamma$ is an X-ray wavelength, and is 1.54056 Å), the full-width-at-half-maximum and the crystallite size of the (002) crystal plane diffraction peak are tested and calculated.

**Testing the specific surface area, pore volume, and pore diameter**

The porous carbon material is tested using a physical adsorption instrument (model: ipore 620). The test process includes the following steps: Taking 0.15 g of porous carbon material as a sample, placing the sample in a sample tube, degassing the sample at 200 °C for 6 hours, and then testing the amount of argon adsorbed by the sample at different pressures, and using the resultant data to plot an isothermal adsorption curve of the sample; subsequently, calculating the specific surface area of the sample by performing BET fitting, calculating the pore volume and pore size distribution of the sample by performing non-local density functional theory (NLDFT) fitting, and then calculating the pore volume percentages of ultramicropores and micropores based on the pore volume.

**Testing the electrical conductivity**

The electrical conductivity of the porous carbon material solid powder is tested by using a powder conductivity meter (model: FT-8100). Based on the four-point probe test principle, 1.5 g of porous carbon material solid powder is placed in a special-purpose powder sample test fixture, and then a pressure of 130 MPa is applied to the sample, and then the electrical conductivity of the porous carbon material is measured.

**Testing the rate performance**

A lithium-ion battery prepared in an embodiment or comparative embodiment and ready for testing is left to stand for 5 minutes at a temperature of 25 °C, and then charged at a constant current of 0.7C until the voltage reaches 4.45 V, and then charged at a constant voltage of 4.45 V until the current drops to 0.05C. Subsequently, the battery is left to stand for 5 minutes, and then discharged at a constant current of 0.2C until the voltage drops to 3.0 V. The discharge capacity at this time is recorded as a 0.2C discharge capacity. Afterward, the battery is left to stand for 5 minutes, and the above charging process is repeated, and then the battery is discharged at a constant current of 2C. The discharge capacity at this time is recorded as a 2C discharge capacity.

C-rate capacity retention rate = (2C discharge capacity/0.2C discharge capacity) $\times$ 100%.

**Testing the cycle performance**

At a test temperature of 25 °C, a lithium-ion battery to be tested is left to stand for 5 minutes, and then an initial thickness of the lithium-ion battery is measured and recorded as $MMC_0$. The lithium-ion battery is subjected to a 3.4C charging process. The 3.4C charging process includes: charging the lithium-ion battery at a constant current of 3.4C until the voltage reaches 4.25 V, and then charged at a constant current of 2C until the voltage reaches 4.4 V, and then charged at a constant current of 1C until the voltage reaches 4.50 V, and then charged at a constant voltage of 4.50 V until the current drops to 0.05C. Subsequently, the battery is left to stand for 5 minutes, and then discharged at a constant current of 0.5C until the voltage drops to 3.0 V, and then the battery is left to stand for 5 minutes, and the discharge capacity of the lithium-ion battery at this time is recorded as $C_1$. The 3.4C charging process and the 0.5C discharging process together form one charge-discharge cycle. After the battery undergoes 400 cycles, the thickness of the lithium-ion battery is measured as $MMC_1$, and the discharge capacity of the lithium-ion battery is recorded as $C_2$.

$$\text{Cycle capacity retention rate } (\%) = C_2/C_1 \times 100\%.$$

$$\text{Cycle thickness expansion rate } (\%) = (MMC_1 - MMC_0)/MMC_0 \times 100\%.$$

**Embodiment 1-1**

**Preparing a porous carbon material**

A method for preparing a porous carbon material in this embodiment includes the following steps:

Step 1: Mix linear phenolic resin (carbon precursor), urotropine (curing agent), and ferric citrate (graphitization catalyst) at a mass ratio of 90 : 10 : 1 to obtain a mixture, where the molecular weight of the linear phenolic resin is 811 and the mass ratio w of the ferric citrate to the linear phenolic resin is 0.001; heat the mixture is heated to 180 °C ($T_1$ °C) at a heating rate of 5 °C/min, and then perform a first isothermal treatment on the mixture at 180 °C for 10 h ($t_1$ h) to crosslink and cure the linear phenolic resin and the urotropine to obtain a cured product.

Step 2: Place the cured product in a nitrogen atmosphere, heat the cured product to 1200 °C ($T_2$ °C) at a heating rate of 5 °C/min, and keep the cured product at 1200 °C for 4 h ($t_2$ h) to obtain a carbide. Pulverize the carbide into particles by using a pulverizer, and then pass the particles through a 300-mesh sieve.

Step 3: Place the carbide sieved out into a rotary kiln, introduce carbon dioxide into the rotary kiln as an activator atmosphere, heat the carbide to 900 °C ($T_3$ °C) at a heating rate of 5 °C/min, perform a third isothermal treatment at 900 °C for 12 h ($t_3$ h), and obtain a porous carbon material containing iron impurities after cooling. Subsequently, wash the porous carbon material containing iron impurities several times by using hydrochloric acid and deionized water, and oven-dry the material to obtain the porous carbon material of this embodiment.

**Preparing a silicon-carbon material**

The prepared porous carbon material is placed into a piece of fluidized bed deposition equipment, nitrogen is introduced to fluidize the porous carbon, and then the temperature is increased to a preset value of 500 °C at a heating rate of 5 °C/min. Silane gas is introduced into the equipment to react for 7.5 hours, and then the temperature is increased to 600 °C. Acetylene gas is introduced to generate a carbon coating layer on the silicon-carbon surface. After the reaction is completed, the reaction product is cooled to room temperature to obtain a silicon-carbon material.

**Preparing a negative electrode**

Graphite, the silicon-carbon material prepared according to each embodiment and comparative embodiment, a conductive agent (carbon black), and a binder PAA are mixed at a mass ratio of 70 : 15 : 5 : 10, and an appropriate amount of water is added. The mixture is kneaded until the solid content reaches 65 wt%, and then an appropriate amount of water is added, and the viscosity of the mixture is adjusted to 5000 Pa·s to make a negative electrode slurry. A sheet of negative current collector copper foil is coated with the negative electrode slurry, and then oven-dried and cold-pressed to obtain a negative electrode.

## Preparing a positive electrode

$LiCoO_2$, carbon black, and polyvinylidene difluoride (PVDF) are mixed at a mass ratio of 95 : 2.5 : 2.5 in an N-methyl-pyrrolidone solvent system to obtain a positive electrode slurry. A sheet of positive current collector aluminum foil is coated with the prepared positive electrode slurry, and then oven-dried and cold-pressed to obtain a positive electrode.

## Preparing an electrolyte solution

Propylene carbonate, ethylene carbonate, propyl propionate, and ethyl propionate are mixed at a mass ratio of 2 : 1 : 1 : 2 in a dry argon atmosphere to form a solvent. $LiPF_6$ and fluoroethylene carbonate are added into the solvent and mixed well to obtain an electrolyte solution. Based on the mass of the electrolyte solution, the mass percent of the $LiPF_6$ is 12.5%, and the mass percent of the fluoroethylene carbonate is 3.5%.

## Preparing a separator

A polyethylene or polypropylene composite porous polymer film is used as a separator.

## Preparing a lithium-ion battery

The positive electrode, the separator, and the negative electrode are stacked in sequence, with the separator being located between the positive electrode and the negative electrode to serve a function of separation. The stacked structure is wound to obtain a bare cell. The bare cell is placed into an outer package, an electrolyte solution is injected into the outer package, and then the outer package is sealed. Steps such as chemical formation, degassing, and edge trimming are performed to obtain a lithium-ion battery.

The porous carbon material in each embodiment and comparative embodiment in Table 1 differs from that in Embodiment 1-1 merely in that the preparation method of the porous carbon material is adjusted according to the parameters in Table 1.

**Table 1**

| Embodiment | Type of carbon precursor | Molecular formula of carbon precursor | Graphitization catalyst | Mass ratio w of graphitization catalyst to carbon precursor |
|---|---|---|---|---|
| Embodiment 1-1 | Phenolic resin | 811 | Ferric citrate | 0.001 |
| Embodiment 1-2 | Phenolic resin | 811 | Ferric citrate | 0.011 |
| Embodiment 1-3 | Phenolic resin | 811 | Ferric citrate | 0.044 |
| Embodiment 1-4 | Phenolic resin | 811 | Ferric citrate | 0.056 |
| Embodiment 1-5 | Phenolic resin | 811 | Ferric citrate | 0.111 |
| Embodiment 1-6 | Phenolic resin | 811 | Ferric citrate | 0.222 |
| Embodiment 1-7 | Phenolic resin | 811 | \ | \ |
| Embodiment 2-1 | Coconut shell | \ | Ferric citrate | 0.044 |
| Embodiment 2-2 | Phenolic resin | 500 | Ferric citrate | 0.044 |
| Embodiment 2-3 | Phenolic resin | 519 | Ferric citrate | 0.044 |
| Embodiment 2-4 | Phenolic resin | 665 | Ferric citrate | 0.044 |
| Embodiment 2-5 | Phenolic resin | 758 | Ferric citrate | 0.044 |
| Embodiment 2-6 | Phenolic resin | 952 | Ferric citrate | 0.044 |
| Embodiment 2-7 | Phenolic resin | 976 | Ferric nitrate | 0.044 |
| Embodiment 2-8 | Phenolic resin | 976 | Ferric citrate | 0.044 |

The porous carbon material in each embodiment and comparative embodiment in Table 2 differs from that in Embodiment 1-1 merely in that the preparation method of the porous carbon material is adjusted according to the parameters in Table 2.

Table 2

| Embodiment | Reaction temperature $T_2$ (°C) | Reaction time $t_2$ (h) | Activator atmosphere | Reaction temperature $T_3$ (°C) | Reaction time $t_3$ (h) |
|---|---|---|---|---|---|
| Comparative Embodiment 1-1 | 700 | 4 | Carbon dioxide | 900 | 14 |
| Comparative Embodiment 1-2 | 700 | 4 | Carbon dioxide | 900 | 12 |
| Embodiment 3-1 | 800 | 2 | Water vapor | 900 | 12 |
| Embodiment 3-2 | 800 | 2 | Water vapor + carbon dioxide | 900 | 12 |
| Embodiment 3-3 | 800 | 2 | Carbon dioxide | 900 | 12 |
| Embodiment 3-4 | 1000 | 4 | Carbon dioxide | 950 | 12 |
| Embodiment 3-5 | 1000 | 6 | Carbon dioxide | 950 | 12 |
| Embodiment 3-6 | 1200 | 2 | Carbon dioxide | 900 | 14 |
| Embodiment 3-7 | 1200 | 4 | Carbon dioxide | 900 | 14 |
| Embodiment 3-8 | 1500 | 4 | Carbon dioxide | 1000 | 6 |
| Comparative Embodiment 1-3 | 1600 | 5 | Carbon dioxide | 1000 | 6 |

The porous carbon material in each embodiment and comparative embodiment is tested according to the above test method, and the test results are shown in Table 3.

**Table 3**

| Embodiment | FWHM (°) | Crystallite size g (nm) | Conductivity Z (S/cm) | Specific surface area SA (m²/g) | Pore volume Pv (cm³/g) | Volume percentage of ultramicropores $P_0$ (%) | Volume percentage of micropores $P_1$ (%) | C-rate capacity retention rate (%) | Cycle capacity retention rate (%) | Cycle thickness expansion rate (%) |
|---|---|---|---|---|---|---|---|---|---|---|
| Embodiment 1-1 | 6.32 | 0.71 | 9.8 | 1615 | 0.68 | 8 | 90 | 91.1 | 88.3 | 12.8 |
| Embodiment 1-2 | 7.6 | 0.88 | 10.2 | 1752 | 0.81 | 16 | 96 | 91.2 | 88.7 | 12.7 |
| Embodiment 1-3 | 8.37 | 1.02 | 18.6 | 1871 | 0.87 | 13 | 89 | 93.8 | 92.3 | 11.3 |
| Embodiment 1-4 | 6.18 | 1.54 | 22.7 | 1932 | 0.92 | 9 | 85 | 94.7 | 94.3 | 11.0 |
| Embodiment 1-5 | 8.66 | 1.86 | 36.8 | 1652 | 1.34 | 6 | 76 | 94.9 | 94.6 | 10.6 |
| Embodiment 1-6 | 8.42 | 3.1 | 42.1 | 1321 | 1.56 | 7 | 69 | 93.2 | 90.9 | 11.8 |
| Embodiment 1-7 | 9.2 | 0.7 | 7.7 | 1568 | 0.60 | 3 | 92 | 92.1 | 90.4 | 12.5 |
| Embodiment 2-1 | 11.02 | 0.72 | 8.6 | 1826 | 0.79 | 16 | 92 | 91.1 | 88.7 | 12.9 |
| Embodiment 2-2 | 11.04 | 0.68 | 7.3 | 1882 | 0.83 | 15 | 96 | 91.8 | 89.4 | 12.4 |
| Embodiment 2-3 | 8.82 | 0.98 | 16.3 | 1622 | 0.74 | 26 | 99 | 92.1 | 89.4 | 12.3 |
| Embodiment 2-4 | 8.18 | 1.14 | 18.1 | 1705 | 0.77 | 22 | 98 | 93.6 | 93.1 | 11.5 |
| Embodiment 2-5 | 7.62 | 1.38 | 24.3 | 2028 | 1.12 | 9 | 84 | 93.4 | 92.7 | 11.3 |
| Embodiment 2-6 | 8.31 | 1.01 | 16.6 | 1762 | 0.89 | 24 | 92 | 93.4 | 93.0 | 11.2 |
| Embodiment 2-7 | 8.86 | 0.96 | 20.7 | 1821 | 0.92 | 24 | 98 | 92.0 | 90.0 | 12.3 |
| Embodiment 2-8 | 8.26 | 1.1 | 18.3 | 1647 | 0.96 | 12 | 82 | 93.8 | 92.8 | 11.4 |
| Comparative Embodiment 1-1 | 11.6 | 1.02 | 16.2 | 1750 | 0.76 | 26 | 99 | 86.9 | 82.2 | 14.8 |
| Comparative Embodiment 1-2 | 11.4 | 1.14 | 18.2 | 1905 | 0.9 | 22 | 92 | 88.3 | 83.4 | 14.1 |
| Embodiment 3-1 | 10.39 | 1.21 | 18.7 | 1689 | 1.29 | 12 | 91 | 92.5 | 90.6 | 11.9 |
| Embodiment 3-2 | 9.02 | 1.19 | 18.4 | 1720 | 0.6 | 15 | 96 | 93.2 | 91.5 | 11.9 |
| Embodiment 3-3 | 8.4 | 1.31 | 24.6 | 1826 | 0.88 | 16 | 93 | 94.7 | 94.3 | 10.7 |
| Embodiment 3-4 | 7.6 | 1.62 | 16.6 | 1712 | 1.33 | 24 | 85 | 94.1 | 92.2 | 11.4 |
| Embodiment 3-5 | 4.6 | 2.01 | 20.9 | 1621 | 1.62 | 24 | 66 | 91.8 | 89.3 | 12.3 |
| Embodiment 3-6 | 2.6 | 3.11 | 18.6 | 1947 | 0.96 | 18 | 96 | 95.5 | 95.1 | 10.1 |

(continued)

| Embodiment | FWHM (°) | Crystallite size g (nm) | Conductivity Z (S/cm) | Specific surface area SA (m²/g) | Pore volume Pv (cm³/g) | Volume percentage of ultramicropores $P_0$ (%) | Volume percentage of micropores $P_1$ (%) | C-rate capacity retention rate (%) | Cycle capacity retention rate (%) | Cycle thickness expansion rate (%) |
|---|---|---|---|---|---|---|---|---|---|---|
| Embodiment 3-7 | 2.2 | 3.62 | 40.9 | 1821 | 1.32 | 16 | 95 | 94.8 | 94.0 | 10.8 |
| Embodiment 3-8 | 1.8 | 4.2 | 28.6 | 1547 | 1.8 | 6 | 60 | 91.1 | 88.7 | 12.9 |
| Comparative Embodiment 1-3 | 1.5 | 3.92 | 22.5 | 1655 | 1.2 | 7 | 54 | 88.9 | 85.5 | 13.5 |

As can be seen from Table 3, the full-width-at-half-maximum FWHM° of the (002) crystal plane diffraction peak of the porous carbon material in this application satisfies $1.80 \leq FWHM \leq 11.00$, so that the carbon atoms form a well-ordered crystal structure, thereby improving the C-rate performance, anti-expansion performance, and cycle performance of the lithium-ion battery. In particular, when $2.20 \leq FWHM \leq 8.66$, the material favorably improves the electron transport rate and structural stability of the porous carbon material, and further improves the C-rate performance, anti-expansion performance, and cycle performance of the lithium-ion battery.

Especially, on the basis of the above full-width-at-half-maximum, by controlling the crystallite size of the porous carbon material, denoted as g nm, to satisfy $0.88 \leq g \leq 4.20$, this application can enhance the short-range ordered structure of the carbon material, improve the electronic conductivity and structural stability of the porous carbon material, and further improve the C-rate performance, anti-expansion performance, and cycle performance of the lithium-ion battery. In particular, when $1.54 \leq g \leq 3.10$, the lithium-ion battery can exhibit even higher C-rate performance, anti-expansion performance, and cycle performance.

Especially, by controlling the pore volume percentages, specific surface area, and pore volume of ultramicropores and micropores in the porous carbon material to meet the above ranges respectively, this application achieves a relatively large specific surface area and a micropore-rich structure of the material, thereby enabling the lithium-ion battery to achieve excellent C-rate performance, anti-expansion performance, and cycle performance at the same time.

In addition, with reference to the data in Table 1 to Table 3, it can be seen that this application adjusts the amount of the graphitization catalyst added and controls the mass ratio w of the graphitization catalyst to the carbon precursor to satisfy $0.001 \leq w \leq 0.230$, thereby improving the graphitization degree and crystallinity of the porous carbon material, improving the porous structure of micropores, and improving the specific surface area, pore volume, and micropore volume percentage of the porous carbon material at the same time.

Especially, this application uses phenolic resin as a carbon precursor, and controls the molecular weight of the phenolic resin to be 519 to 976. After reacting with the graphitization catalyst, the phenolic resin can increase the graphitization degree of the porous carbon material and increase the crystallite size, thereby significantly improving the conductivity of the material. In particular, this application uses ferric citrate as a graphitization catalyst, thereby further improving the graphitization degree of the porous carbon material.

Especially, this application controls the second isothermal treatment temperature and treatment time as well as the third isothermal treatment temperature and treatment time to meet the above ranges, thereby optimizing the graphitization degree and pore structure of the porous carbon material, and improving the electrical conductivity and structural stability of the porous carbon graphite material.

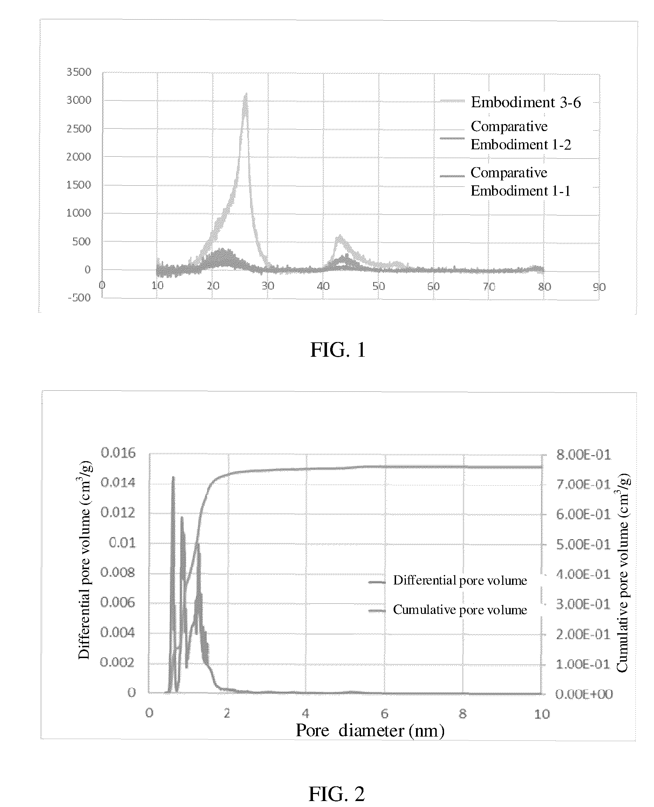

FIG. 1 is an XRD pattern of the porous carbon materials according to Embodiment 3-6 and Comparative Embodiments 1-1 and 1-2. As can be seen from the XRD pattern, in contrast to the comparative embodiment, the (002) crystal plane of the porous carbon material in this embodiment shows a smaller full-width-at-half-maximum and a higher peak intensity. The (002) crystal plane diffraction peak is exhibited at a diffraction angle of 26.5°, which is close to the diffraction angle position of an ideal graphite crystal. The full-width-at-half-maximum FWHM° of the (002) crystal plane diffraction peak of the porous carbon material in this embodiment is measured to be 2.6°, demonstrating a relatively high degree of crystallinity.

FIG. 2 is a pore distribution graph of the porous carbon material according to Embodiment 3-6, where the pore volume percentage $P_1\%$ of the micropores with a pore diameter less than or equal to 2 nm is 96%, and the pore volume percentage $P_0\%$ of the ultramicropores with a pore diameter less than or equal to 0.7 nm is 18%.

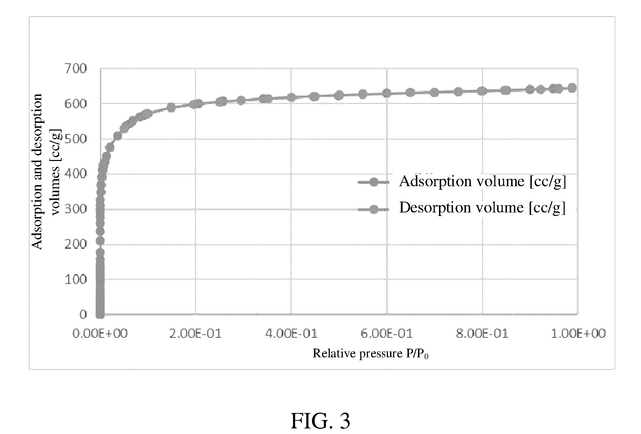

FIG. 3 is an adsorption isotherm graph of a porous carbon material according to Embodiment 3-6. From the adsorption and desorption isotherm data, it can be seen that the adsorption and desorption isotherms almost overlap completely, and the difference between the adsorption volume and the desorption volume is tiny. The material is a typical microporous material.

**Claims**

1. A porous carbon material, **characterized in that**, in an XRD pattern of the porous carbon material, a (002) crystal plane diffraction peak is exhibited at a diffraction angle 2θ of 26.1° to 26.9°, and a full-width-at-half-maximum of the (002) crystal plane diffraction peak is FWHM°, $1.80 \leq FWHM \leq 11.00$.

2. The porous carbon material according to claim 1, **characterized in that**, a crystallite size of the porous carbon material is g nm, and $0.88 \leq g \leq 4.20$.

3. The porous carbon material according to claim 1 or 2, **characterized in that**, $2.20 \leq FWHM \leq 8.66$.

4. The porous carbon material according to claim 2 or 3, **characterized in that**, $1.54 \leq g \leq 3.10$.

5. The porous carbon material according to any one of claims 1 to 4, **characterized in that**, based on a pore volume of the porous carbon material, a pore volume percentage of ultramicropores with a pore diameter less than or equal to 0.7 nm is $P_0$%, and a pore volume percentage of micropores with a pore diameter less than or equal to 2 nm is $P_1$%, $2 \leq P_0 \leq 28$, and $82 \leq P_1 \leq 100$.

6. The porous carbon material according to any one of claims 1 to 5, **characterized in that**, a specific surface area of the porous carbon material is SA $m^2$/g, and $1014 \leq SA \leq 2492$.

7. The porous carbon material according to any one of claims 1 to 6, **characterized in that**, a pore volume of the porous carbon material is Pv $cm^3$/g, and $0.52 \leq Pv \leq 1.60$.

8. The porous carbon material according to any one of claims 1 to 7, **characterized in that**, an electrical conductivity of the porous carbon material at a pressure of 130 MPa is Z S/cm, and $14.0 \leq Z \leq 97.0$.

9. A preparation method of the porous carbon material according to any one of claims 1 to 8, **characterized in that**, the method comprises the following steps:

   step 1: mixing a carbon precursor, a curing agent, and a graphitization catalyst, and then performing a first isothermal treatment at $T_1$ °C for a treatment time of $t_1$ h to obtain a cured product, wherein $120 \leq T_1 \leq 300$, $1 \leq t_1 \leq 20$, and the graphitization catalyst comprises at least one of ferric nitrate or ferric citrate;
   step 2: placing the cured product in an inert atmosphere, and performing a second isothermal treatment at $T_2$ °C for a treatment time of $t_2$ h to obtain a carbide, wherein $800 \leq T_2 \leq 1500$, and $0.5 \leq t_2 \leq 8.0$; and
   step 3: placing the carbide in an activator atmosphere, performing a third isothermal treatment at $T_3$ °C for a treatment time of $t_3$ h to obtain the porous carbon material, wherein $800 \leq T_3 \leq 1100$, and $6 \leq t_3 \leq 30$.

10. The preparation method according to claim 9, **characterized in that**, the preparation method satisfies at least one of the following conditions:

    (1) the carbon precursor comprises phenolic resin, and a molecular weight of the phenolic resin is 519 to 976;
    (2) the curing agent is at least one selected from urotropine, melamine, or urea; or
    (3) the activator atmosphere is at least one selected from carbon dioxide, water vapor, oxygen, air, or ammonia.

11. The preparation method according to claim 9 or 10, **characterized in that**, a mass ratio of the graphitization catalyst to the carbon precursor is w, and $0.001 \leq w \leq 0.230$.

12. The preparation method according to any one of claims 9 to 11, **characterized in that**, $849 \leq T_2 \leq 1299$.

13. A silicon-carbon material, **characterized in that**, the silicon-carbon material comprises the porous carbon material according to any one of claims 1 to 8.

14. A secondary battery, comprising a positive electrode, a negative electrode, and an electrolyte solution; **characterized in that**, the negative electrode comprises a negative current collector and a negative active material layer disposed on at least one surface of the negative current collector, and the negative active material layer comprises the silicon-carbon material according to claim 13.

15. An electronic device, **characterized in that**, the electronic device comprises the secondary battery according to claim 14.

FIG. 1

FIG. 2

FIG. 3

Europäisches
Patentamt
European
Patent Office
Office européen
des brevets

# EUROPEAN SEARCH REPORT

**Application Number**

EP 25 17 8979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YEON SUN-HWA ET AL: "Unique cyclic performance of post-treated carbide-derived carbon as an anode electrode", CARBON, ELSEVIER OXFORD, GB, vol. 78, 28 June 2014 (2014-06-28), pages 91-101, XP029043350, ISSN: 0008-6223, DOI: 10.1016/J.CARBON.2014.06.052 | 1-4,6-8, 13-15 | INV. C01B32/05 C01B32/205 H01M4/62 H01M10/054 C01B33/02 H01M4/587 H01M4/133 H01M10/0525 |
| Y | * tables 1-2 * | 13-15 | H01M4/134 |
| A | * Results and discussion section on p. 93 * * Experimental section on p.92 * * abstract * | 5 | H01M4/36 H01M4/38 |
| X | JP 6 960622 B2 (ASAHI KASEI CORP; UNIV KANSAI) 5 November 2021 (2021-11-05) | 1,6,7, 13-15 | |
| Y | * paragraph [0047] - paragraph [0053] * | 13-15 | |
| A | | 5 | |
| X | CN 1 247 212 A (SHANXI COAL CHEM INST [CN]) 15 March 2000 (2000-03-15) * claims 1-10 * * page 1 - page 4 * | 9-12 | **TECHNICAL FIELDS SEARCHED (IPC)** C01B H01M |
| Y | LIU XUYAN ET AL: "Solutions for the problems of silicon-carbon anode materials for lithium-ion batteries", ROYAL SOCIETY OPEN SCIENCE, vol. 5, no. 6, 1 June 2018 (2018-06-01), page 172370, XP093321898, ISSN: 2054-5703, DOI: 10.1098/rsos.172370 * the whole document * | 13-15 | |

The present search report has been drawn up for all claims

| Place of search | Date of completion of the search | Examiner |
|---|---|---|
| The Hague | 3 November 2025 | Eren, Hamit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8979

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | | Publication date | Patent family member(s) | | Publication date |
|---|---|---|---|---|---|
| JP 6960622 | B2 | 05-11-2021 | JP<br>JP | 6960622 B2<br>2018039685 A | 05-11-2021<br>15-03-2018 |
| CN 1247212 | A | 15-03-2000 | NONE | | |

EPO FORM P0459

For more details about this annex : see Official Journal of the European Patent Office, No. 12/82